# EUROPÄISCHE PATENTANMELDUNG

(11) **EP 1 094 268 A2**
(43) Veröffentlichungstag der Anmeldung: **25.04.2001**
(21) Anmeldenummer: 00122913.7
(22) Anmeldetag: 20.10.2000
(51) Int. Cl.: F17C 13/04

(54) **Verfahren zum Verbinden eines Kupplungssteckers mit einer Kupplungsdose**

(30) Priorität: 22.10.1999 DE 19951033
(71) Anmelder: Linde Aktiengesellschaft, 65189 Wiesbaden (DE)
(72) Erfinder: Reese, Wilfried-Henning, 85716 Unterschleissheim (DE)
(74) Vertreter: Zahn, Christoph

(57) **Zusammenfassung**

Es wird ein Verfahren zum Verbinden eines Kupplungssteckers mit einer Kupplungsdose beschrieben. Erfindungsgemäß wird unmittelbar vor und während des Einführens des Kupplungssteckers in die Kupplungsdose die in die Kupplungsdose einzuführende Seite des Kupplungssteckers bzw. der in die Kupplungsdose einzuführende Bereich des Kupplungssteckers mit einem inerten Gas, wobei es sich vorzugsweise um Helium oder Stickstoff handelt, gespült.

Das Spülen mit einem inerten Gas wird in vorteilhafter Weise erst nach dem Verbinden von Kupplungsstecker und Kupplungsdose beendet.

Anschließend kann zusätzlich ein Dichtheitstest in Form einer Druckstandsprobe vorgesehen werden. Hierzu werden Kupplungsstecker und Kupplungsdose mit einem Prüfdruck beaufschlagt und es erfolgt über ein vorbestimmtes Zeitintervall eine Erfassung des Prüfdruckes.

## Beschreibung

Die Erfindung betrifft ein Verfahren zum Verbinden eines Kupplungssteckers mit einer Kupplungsdose.

Für die Betankung von Kraftfahrzeugen, wie Pkws, Busse, etc., Lokomotiven oder Flugzeugen mit einem kryogenen Kraftstoff, wie beispielsweise flüssigem Wasserstoff oder Flüssigerdgas, werden spezielle Betankungskupplungen verwendet. Diese bestehen aus einem Kupplungsstecker ― dem sog. Male-Teil ― sowie einer Kupplungsdose ― dem sog. Female-Teil ―, wobei der tankstellenseitige Kupplungsstecker in die an dem zu betankenden Objekt vorgesehene Kupplungsdose eingeführt wird.

Eine derartige Betankungskupplung ist beispielsweise aus der DE-PS 41 04 766 bekannt. Die darin beschriebene Betankungskupplung weist zwei Kugelhähne auf, die erst nach erfolgter Verbindung zwischen Kupplungsstecker und Kupplungsdose, welche durch eine mechanische Verklammerung oder Verschraubung der beiden Teile realisiert wird, geöffnet werden, so daß das kryogene Medium ― vorzugsweise in verflüssigter bzw. flüssiger Form ― aus der Tankstelle in den zu befüllenden Speicherbehälter überfüllt werden kann. Da hierbei im Regelfall ein wenn auch nur geringer Teil des Mediums verdampft, wird eine zweite Leitung vorgesehen ― man spricht dann von einer zweiadrigen Betankungskupplung ―, über die der verdampfte Anteil des Mediums aus dem Speicherbehälter in die Tankstelle zurückgeführt oder an die Atmosphäre abgegeben wird.

Daneben sind sog. einadrige Betankungskupplungen bekannt, bei deren Verwendung durch entsprechende Betankungsprozesse das teilweise Verdampfen des kryogenen Mediums vermieden werden muß.

Anstelle der erwähnten Kugelhähne können auch Rückschlagventile vorgesehen werden, die jedoch den Nachteil haben, daß sie aufgrund ihrer Empfindlichkeit gegen eine Verschmutzung oftmals beim erneuten Schließen nicht mehr dicht sind.

Bevor nach einem erfolgten Verbinden die Kugelhähne geöffnet werden können, ist es aus Sicherheitsgründen erforderlich, daß zunächst ein eventuell vorhandener Totraum zwischen den Kupplungsflanschen entweder evakuiert ― was technisch vergleichsweise aufwendig wäre ― oder mit einem inerten Gas ausgespült wird. Diese Prozedur ist erforderlich, damit ein Entzünden des möglicherweise in einem derartigen Totraum vorhandenen kryogenen Mediums verhindert werden kann.

Ferner muß nach dem Zusammenführen von Kupplungsstecker und Kupplungsdose die Dichtheit der Verbindung geprüft werden. Diese Prüfung wird bisher mit einem entsprechenden Leckdetektor oder durch Einsprühen der Betankungskupplung mit einer Seifenlösung durchgeführt.

Des Weiteren wird das zu betankende Objekt mittels eines Erdungskabels auf das Potential der Tankstelle angeglichen, so daß ein Überspringen von Funken aufgrund statischer Aufladungen wirkungsvoll verhindert werden kann.

Erst wenn diese Prozeduren abgeschlossen sind, kann mit dem eigentlichen Betankungsvorgang begonnen werden. Aufgrund bestehender Vorschriften darf der Betankungsvorgang bisher nur von eingewiesenem Fachpersonal durchgeführt werden. Die Akzeptanz von mit kryogenen Kraftstoffen betriebenen Fahrzeugen hängt jedoch auch wesentlich von der Bedienungsfreundlichkeit ab.

Es ist daher ein ständiges Bestreben, den beschriebenen, vergleichsweise komplizierten Betankungsvorgang zu vereinfachen und zu automatisieren, also mit sog. Betankungsrobotern durchzuführen. Dabei ist es nicht mehr erforderlich, daß beispielsweise der Fahrer eines Kraftfahrzeuges während des Betankungsvorganges sein Fahrzeug verläßt, da vom Öffnen bis zum Schließen des Tankdeckels alle Arbeitsschritte durch den Betankungsroboter ausgeführt werden.

Aufgabe der vorliegenden Erfindung ist es daher, ein Verfahren zum Verbinden eines Kupplungssteckers mit einer Kupplungsdose anzugeben, das verfahrenstechnisch einfacher aufgebaut ist, hinsichtlich einer möglichen Entzündung des kryogenen Mediums sicherer ist und zudem eine Automatisierung des Betankungsvorganges ermöglicht.

Insbesondere soll eine Dichtigkeitsprüfung mittels Leckdetektor oder Einsprühen der Betankungskupplung mit einer Seifenlösung ― also eine visuelle Sichtprüfung ― vermieden werden können. Auch das Anbringen eines Erdungskabels zwischen Tankstelle und zu betankendem Objekt soll sich bei dem erfindungsgemäßen Verfahren erübrigen, da dieser Vorgang einen vergleichsweise hohen steuerungstechnischen Aufwand für einen Betankungsroboter erfordern würde.

Dies wird erfindungsgemäß dadurch erreicht, daß unmittelbar vor und während des Einführens des Kupplungssteckers in die Kupplungsdose die in die Kupplungsdose einzuführende Seite des Kupplungssteckers bzw. der in die Kupplungsdose einzuführende Bereich des Kupplungssteckers mit einem inerten Gas gespült wird.

Die Zuführung des inerten Gases in diesen Bereich kann beispielsweise mittels einer außen an dem Kupplungsstecker vorzusehenden Leitung erfolgen. Auch kann innerhalb des Kupplungssteckers ― neben der oder den bereits vorhandenen Leitungen ― eine zusätzliche Leitung, die der Zuführung des inerten Gases dient, vorgesehen werden. Daneben ist es denkbar, die in dem Kupplungsstecker bereits vorhandene(n) Leitung(en) vor und während des Verbindungsvorganges als Zuführleitung für das Inertgas vorzusehen.

Im Gegensatz zu den bekannten Verfahren wir nunmehr bereits während der Annäherung des Kupplungssteckers an die Kupplungsdose diejenige Seite bzw. derjenige Bereich des Kupplungssteckers, die bzw. der in die Kupplungsdose eingeführt wird, mit einem inerten Gas gespült. Die Ausbildung eines zündfähigen Gemisches aus kryogenem Medium und Atmosphäre kann dadurch wirkungsvoll verhindert werden.

Somit kann auf das Anbringen eines Erdungskabels zwischen Tankstelle und zu betankendem Objekt verzichtet werden, da auch bei einer eventuellen Funkenbildung aufgrund von unterschiedlichen Potentialen keine Zündung erfolgen könnte. Sobald der Kupplungsstecker mit der Kupplungsdose verbunden ist, erfolgt der Potentialausgleich über die metallischen und damit leitenden Bauteile von Kupplungsstecker und Kupplungsdose.

Als inertes Spülgas kommen vorzugsweise Helium oder Stickstoff zum Einsatz.

Das Spülgas wird dazu beispielsweise mittels sog. On-site-Anlagen zur Verfügung gestellt. Bei diesen handelt es sich um kryogen, permeativ oder adsorptiv arbeitende Anlagen, mittels denen ― beispielsweise aus der Umgebungsluft― nahezu beliebig reiner Stickstoff gewonnen werden kann. Daneben ist auch eine Bereitstellung des Inertgases mittels Speicherbehälter, die in regelmäßigen Abständen von Tankfahrzeugen befüllt werden, möglich. Auch eine Bereitstellung mittels Druckspeicherflaschen ist insbesondere dann sinnvoll, wenn der Verbrauch an Inertgas gering ist.

In vorteilhafter Weise wird ― entsprechend einer Ausgestaltung des erfindungsgemäßen Verfahrens ― das Spülen mit einem inerten Gas erst nach dem Verbinden von Kupplungsstecker und Kupplungsdose beendet.

Mittels dieser Ausgestaltung des erfindungsgemäßen Verfahrens wird sichergestellt, daß auch nach dem Verbinden von Kupplungsstecker und Kupplungsdose kein zündfähiges Gemisch gebildet werden kann. Gleichzeitig wird sichergestellt, daß ein eventuell vorhandener Tot- oder Zwischenraum innerhalb der Betankungskupplung inertisiert ist.

Somit können das Spülen sowie Inertisieren von Kupplungsstecker und Kupplungsdose bzw. der Betankungskupplung in einem Schritt erfolgen.

Das erfindungsgemäße Verfahren weiterbildend wird vorgeschlagen, daß nach dem Verbinden von Kupplungsstecker und Kupplungsdose ein Dichtheitstest in Form einer Druckstandsprobe vorgenommen wird.

Vorzugsweise werden hierzu Kupplungsstecker und Kupplungsdose zunächst mit einem Prüfdruck beaufschlagt. Anschließend erfolgt über ein vorbestimmtes Zeitintervall eine Erfassung des Prüfdruckes. Sofern dieser nicht abfällt, ist eine dichte Verbindung zwischen Kupplungsstecker und Kupplungsdose realisiert und es kann mit dem Betankungsvorgang begonnen werden. Wird ein Druckabfall detektiert, verhindert eine entsprechende Steuerung, daß mit dem Betankungsvorgang begonnen werden kann.

Eine derartiger Dichtheitstest kann automatisiert werden, so daß die bisher erforderlichen Leckdetektoren oder das Einsprühen der Betankungskupplung mit einer Seifenlösung ― also eine visuelle Sichtprüfung ― nicht mehr erforderlich sind.

Das erfindungsgemäße Verfahren gewährleistet ein sicheres Verbinden des Kupplungssteckers sowie der Kupplungsdose einer Betankungskupplung für kryogenen Medien. Zudem wird der Betankungsvorgang verkürzt und sicherer gemacht, so daß er auch von nicht eingewiesenen Personen durchgeführt werden kann. Eine Fehlbedienung kann dabei aufgrund der Einfachheit des Vorganges ausgeschlossen werden.

Auch der Einsatz sog. Betankungsroboter läßt sich bei dem erfindungsgemäßen Verfahren realisieren.

## Patentansprüche

1. Verfahren zum Verbinden eines Kupplungssteckers mit einer Kupplungsdose, **dadurch gekennzeichnet,** daß unmittelbar vor und während des Einführens des Kupplungssteckers in die Kupplungsdose die in die Kupplungsdose einzuführende Seite des Kupplungssteckers bzw. der in die Kupplungsdose einzuführende Bereich des Kupplungssteckers mit einem inerten Gas gespült wird.

2. Verfahren nach Anspruch 1, dadurch gekennzeichnet, daß das Spülen mit einem inerten Gas erst nach dem Verbinden von Kupplungsstecker und Kupplungsdose beendet wird.

3. Verfahren nach Anspruch 1 oder 2, dadurch gekennzeichnet, daß als inertes Gas Helium oder Stickstoff verwendet wird.

4. Verfahren nach einem der vorhergehenden Ansprüche, dadurch gekennzeichnet, daß nach dem Verbinden von Kupplungsstecker und Kupplungsdose ein Dichtheitstest in Form einer Druckstandsprobe vorgenommen wird.

5. Verfahren nach Anspruch 4, dadurch gekennzeichnet, daß zum Zwecke des Dichtheitstestes Kupplungsstecker und Kupplungsdose mit einem Prüfdruck beaufschlagt werden und über ein vorbestimmtes Zeitintervall eine Erfassung des Prüfdruckes erfolgt.
